# EUROPÄISCHE PATENTANMELDUNG

(11) **EP 1 921 332 A2**
(43) Veröffentlichungstag der Anmeldung: **14.05.2008**
(21) Anmeldenummer: 07014749.1
(22) Anmeldetag: 27.07.2007
(51) Int. Cl.: F16C 19/18, F16C 23/04, F16C 29/06

(54) **Linearwälzlager**

(30) Priorität: 08.11.2006 DE 102006052597
(71) Anmelder: AMK Arnold Müller GmbH & Co.KG, 73230 Kirchheim / Teck (DE)
(72) Erfinder: Müller, Arnold, 73230 Kirchheim/Teck (DE)
(74) Vertreter: Kratzsch, Volkhard

(57) **Zusammenfassung**

Die Erfindung betrifft ein Linearwälzlager (10), mit im Querschnitt entlang einem Kreis verteilt angeordneten, zueinander und zur Mittelachse (14) des Lagers im Wesentlichen parallelen Wälzkörperreihen mit jeweils die Traglaufbahn (16) zumindest einer Wälzkörperreihe aufweisenden, um die Mittelachse (14) des Lagers gruppierten Tragbahnelementen (15), die auf zumindest einem Längenabschnitt in Umfangsrichtung von mindestens einem Anschlussteil (17) derart umfasst sind, dass die Tragbahnelemente (15) mit der Außenfläche (18) des Längenabschnitts an einer zugewandten Innenfläche (19) des mindestens einen Anschlussteils (17) anliegen. Die Innenfläche (19) und die Außenfläche (18) sind zweiachsig gekrümmt und liegen flächig aneinander, so dass eine etwa einem Kugelgelenk ähnliche Gestaltung verwirklicht ist (Fig. 2).

## Beschreibung

Die Erfindung bezieht sich auf ein Linearwälzlager mit den Merkmalen im Oberbegriff des Anspruchs 1.

Es ist ein Linearwälzlager der vorgenannten Art bekannt (EP 1199485 A1), bei dem die einzelnen Tragbahnelemente mit ihren kreisbogenförmigen Außenflächen in einer entsprechenden zylindrischen Innenbohrung eines Anschlussteils aufgenommen sind, welches die Tragbahnelementstruktur umfasst. Die Tragbahnelemente weisen kein Einstellvermögen auf. Sie reagieren auf Verformungen unter Last mit Lastüberhöhungen, die zu örtlich höheren Pressungen und dadurch zu reduzierter Lebensdauer führen.

Bekannt sind ferner sich einstellende Linearführungen (DE 19 49 182 A1). Diese Linearführungen weisen Laufbahnplatten auf, die sich in geschlossenen Käfigen oder Gehäusen befinden. Diese Laufbahnplatten, die die Traglaufbahnen für die Wälzkörper tragen, weisen auf der der Traglaufbahn abgewandten Seite Abstützflächen zur Abstützung gegenüber einem äußeren Anschlussteil auf, wobei diese Außenflächen ausgehend von einer ein Kipplager bildenden Mitte zu den Enden hin abgeschrägt sind. Die Laufbahnplatten können aufgrund dessen wie Wippen wirken und sich an Formänderungen, die durch Belastungen der solche Linearwälzlager durchsetzenden Profile, z.B. Wellen, auftreten, anpassen. Dadurch soll eine gleichmäßigere Belastung der einzelnen Wälzkörper im Vergleich mit starren, kein Einstellvermögen aufweisenden Linearwälzlagern erreicht werden. Ähnliche sich selbsteinstellende Linearwälzlager sind aus DE 42 10 039 A1 bekannt. Bei diesen weisen die Tragbahnelemente auf ihrer Außenfläche eine Wölbung sowohl zu den Enden in Längsrichtung als auch in Umfangsrichtung auf, welche eine Kippbewegung bezüglich eines umfassenden Anschlussteiles ermöglicht.

Derartige sich selbst einstellende Linearwälzlager haben den Nachteil, dass diese nur ein geringes Einstellvermögen in Längsrichtung von z.B. 0,5° haben. Ein größeres Einstellvermögen wird behindert durch Anlaufen der nur leicht gekrümmten Laufbahnplatten in der Aufnahmebohrung des Anschlussteils. Die Laufbahnplatten werden häufig gegen Leichtmetall auf in Längsrichtung sich erstreckenden Geraden abgestützt. Mit großem Radius der balligen Gestaltung der Außenfläche soll eine Verminderung der Hertzschen Pressung erreicht werden und dadurch eine plastische Verformung der Anschlussteile aus Leichtmetall vermieden werden. Dennoch kommt es bei hohen Lasten und Stößen zu plastischer Verformung der Anschlussteile.

Zusammengefasst haben bekannte Linearwälzlager die Nachteile einer verringerten Lebensdauer und Laufkultur schon bei mittleren Kräften dann, wenn kein Anpassungsvermögen an Verformungen des durchsetzenden Profils, z.B. einer Welle, vorliegt. Solche Linearwälzlager, deren Tragbahnelemente eine schwach ballige Außenfläche aufweisen, weisen nur ein geringes Einstellvermögen auf, insbesondere bei großen Querschnittsreihen, und bedingen, dass die Buchse durch separate Halteelemente zusätzlich befestigt werden muss. Alle Buchsen haben aufgrund der Abstützung stark unterschiedlicher Radien in Längs- und Querrichtung nur ein geringes Einstellvermögen und keine Haltefunktion in Bezug auf ein durchsetzendes Profil.

Der Erfindung liegt die Aufgabe zugrunde, ein Linearwälzlager der eingangs genannten Art so auszubilden, dass dessen Tragbahnelemente sich über einen weiten Bereich selbsttätig einstellen und an Verformungen z.B. das Lager durchsetzender Profile, z.B. Wellen, anpassen können, und zwar unabhängig voneinander, wobei zugleich erreicht ist, dass die aus derartigen Tragbahnelementen zusammengesetzte Buchse axial selbsthaltend in einem Anschlussteil aufgenommen wird.

Die Aufgabe ist bei einem Linearwälzlager der eingangs genannten Art gemäß der Erfindung durch die Merkmale im Anspruch 1 gelöst. Weitere vorteilhafte Erfindungsmerkmale und Ausgestaltungen ergeben sich aus den Unteransprüchen. Hierdurch ist erreicht, dass die einzelnen Tragbahnelemente sich nach allen Richtungen selbsttätig unabhängig voneinander einstellen können, so dass bei etwaigen Durchbiegungen von das Linearwälzlager durchsetzenden Profilen und bei etwaigen Verformungen von dieses umfassenden Anschlussteilen die Last sich außerordentlich gleichmäßig auf die einzelnen Wälzkörper verteilt aufgrund der selbsttätigen Einstellung der einzelnen Tragbahnelemente. Die Tragbahnelemente sind jeweils ähnlich einem Kugelgelenk um ihre Längsachse und Querachse neigbar und können sich deswegen an Laufbahnen von ortsfesten Führungsbahnen so ausrichten, dass eine annähernd konstante Belastung der einzelnen Wälzkörper erfolgt. Zugleich ist durch den Formschluss der ineinandergreifenden Außenflächen und Innenflächen eine axiale Halterung der Lagerbuchse innerhalb eines diese umschließenden Anschlussteils gewährleistet, ohne dass es dazu separater Haltelemente bedarf.

Weitere Einzelheiten und Vorteile der Erfindung ergeben sich aus der nachfolgenden Beschreibung.

Der vollständige Wortlaut der Ansprüche ist vorstehend allein zur Vermeidung unnötiger Wiederholungen nicht wiedergegeben, sondern statt dessen lediglich durch Hinweis auf die Ansprüche darauf Bezug genommen, wodurch jedoch alle diese Anspruchsmerkmale als an dieser Stelle ausdrücklich und erfindungswesentlich offenbart zu gelten haben. Dabei sind alle in der vorstehenden und folgenden Beschreibung erwähnten Merkmale sowie auch die allein aus den Zeichnungen entnehmbaren Merkmale weitere Bestandteile der Erfindung, auch wenn sie nicht besonders hervorgehoben und insbesondere nicht in den Ansprüchen erwähnt sind.

Die Erfindung ist nachfolgend anhand von in den Zeichnungen gezeigten Ausführungsbeispielen näher erläutert. Es zeigen:
- Fig. 1: einen schematischen axialen Längsschnitt eines Teils eines Linearwälzlagers auf einer Welle, gemäß einem ersten Ausführungsbeispiel,
- Fig. 2: einen schematischen Schnitt entlang der Linie II - II in Fig. 1,
- Fig. 3: eine vereinfachte schematische Seitenansicht des Linearwälzlagers in Fig. 2,
- Fig. 4: einen schematischen Schnitt etwa entsprechend demjenigen in Fig. 2 eines Teils des Linearwälzlagers in Fig. 2, in größerem Maßstab,
- Fig. 5: einen schematischen Schnitt etwa entsprechend demjenigen in Fig. 4 eines Teils eines Linearwälzlagers gemäß einem zweiten Ausführungsbeispiel,
- Fig. 6: einen schematischen Schnitt etwa entsprechend demjenigen in Fig. 2 eines Linearwälzlagers gemäß einem dritten Ausführungsbeispiel,
- Fig. 7: einen schematischen Schnitt etwa entsprechend demjenigen in Fig. 2 eines Linearwälzlagers gemäß einem vierten Ausführungsbeispiel,
- Fig. 8: einen schematischen Längsschnitt ähnlich demjenigen in Fig. 1 eines Linearwälzlagers gemäß einem fünften Ausführungsbeispiel,
- Fig. 9: einen schematischen Schnitt etwa entsprechend demjenigen in Fig. 1 eines Linearwälzlagers gemäß einem sechsten Ausführungsbeispiel,
- Fig. 10: einen schematischen Schnitt etwa entsprechend demjenigen in Fig. 2 eines Linearwälzlagers gemäß einem siebten Ausführungsbeispiel,
- Fig. 11: einen schematischen Schnitt eines Tragbahnelements des Linearwälzlagers in Fig. 10.,
- Fig. 12: einen schematischen Schnitt eines Käfigelements des Linearwälzlagers in Fig. 10,
- Fig. 13: einen schematischen Schnitt etwa entsprechend demjenigen in Fig. 2 eines Teils eines Linearwälzlagers gemäß einem achten Ausführungsbeispiel.

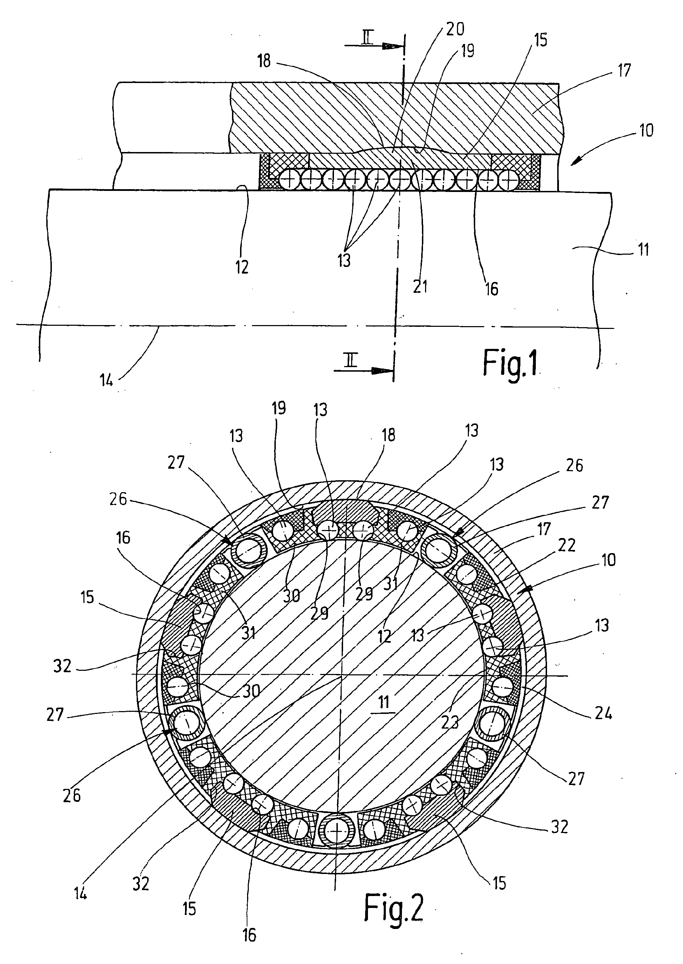

In Fig. 1 bis 4 ist schematisch ein Linearwälzlager 10 gemäß einem ersten Ausführungsbeispiel dargestellt, das hier auf einem Profil 11 in Form einer Welle angeordnet ist. Dieses Profil weist hier einen Kreisquerschnitt auf, kann statt dessen aber auch einen anderen Querschnitt haben. Das Profil 11 bildet auf seiner Außenfläche 12 Laufbahnen für Wälzkörper 13 des Linearwälzlagers 10. Die Wälzkörper 13 können vielfältig gestaltet sein. Sie bestehen mit Vorteil z.B. aus Kugeln oder Zylinderrollen oder Tonnenrollen od. dgl. Die Wälzkörper 13 sind in einzelnen Wälzkörperreihen angeordnet, die zur längsverlaufenden Mittelachse 14 des Lagers 10 und zueinander im wesentlichen parallel verlaufen und - im Querschnitt gemäß Fig. 2 betrachtet - entlang einem Kreis verteilt angeordnet sind. Diesen Wälzkörperreihen sind, soweit es sich um tragende Wälzkörper 13 handelt, Tragbahnelemente 15 zugeordnet, die jeweils die Traglaufbahn 16 zumindest einer Wälzkörperreihe aufweisen und um die Mittelachse 14 in vorzugsweise gleich großen Abständen voneinander gruppiert sind. Beim gezeigten Ausführungsbeispiel sind die Tragbahnelemente 15 doppelreihig und in der Weise gestaltet, dass diese jeweils zwei zueinander etwa parallele Traglaufbahnen 16 aufweisen.

Die Tragbahnelemente 15 sind zumindest auf einem Längenabschnitt in Umfangsrichtung von mindestens einem Anschlussteil 17 derart umfasst, dass die Tragbahnelemente 15 mit ihrer Außenfläche 18 des Längenabschnitts an einer zugewandten Innenfläche 19 des mindestens einen Anschlussteils 17 anliegen.

Eine Besonderheit des Linearwälzlagers 10 gemäß dem ersten Ausführungsbeispiel liegt darin, dass sowohl die Außenfläche 18 als auch die Innenfläche 19 zweiachsig gekrümmt sind und dabei flächig aneinander anliegen. Dabei ist es von Vorteil, wenn die zweiachsige Krümmung der Innenfläche 19 maßgleich und formgleich der Krümmung der Außenfläche 18 ist. Die zweiachsige Krümmung der Innenfläche 19 und der Außenfläche 18 verläuft um eine längs und etwa parallel zur Mittelachse 14 des Lagers 10 verlaufende erste Achse und zugleich auch um eine quer, insbesondere etwa rechtwinklig, zur ersten Achse verlaufende zweite Achse. Dabei kann der Krümmungsradius der zweiachsigen Krümmung um die erste Achse ein anderer als derjenige um die zweite Achse sein. Vorteilhaft kann es statt dessen sein, wenn der Krümmungsradius um die erste Achse der gleiche ist wie derjenige um die zweite Achse, wobei es sich in vorteilhafter Weise um Kreisabschnittkrümmungen handelt. In diesem Fall sind die Innenfläche 19 und die Außenfläche 18, die flächig aneinander liegen, etwa entsprechend einer Kugelkalotte gekrümmt. Hierbei kann der mindestens eine Anschlussteil 17 auf seiner radial innen befindlichen Seite eine konkave Aufnahme 20 aufweisen, die die zweiachsig gekrümmte Innenfläche 19 trägt. In Anpassung daran weisen dann die Tragbahnelemente 15 auf zumindest einem Längenabschnitt außenseitig einen konvex vorspringenden Rücken 21 auf, der die zweiachsig gekrümmte Außenfläche 18 trägt. Bei einem anderen, nicht gezeigten Ausführungsbeispiel sind die Verhältnisse vertauscht. In diesem Fall sind die einzelnen Tragbahnelemente 15 auf der Außenseite 18 mit einer konkaven Aufnahme versehen, die eine entsprechend vertiefte zweiachsig gekrümmte Außenfläche 18 trägt, während der mindestens eine Anschlussteil 17 auf seiner Innenseite einen radial nach innen vorspringenden konvexen Rücken mit entsprechend zweiachsig gekrümmter Innenfläche trägt.

Die Tragbahnelemente 15 sind zueinander beweglich, und zwar in Umfangsrichtung und/oder in radialer Richtung in Bezug zueinander. Dabei können die Tragbahnelemente 15 in Umfangsrichtung und/oder in radialer Richtung von elastisch oder federnd wirkenden Mitteln beaufschlagt sein. Dadurch lässt sich das Linearwälzlager 10 relativ schnell und einfach in den Anschlussteil 17 einsetzen, derart, dass der konvexe Rücken 21 radial mit Formschluss in die konkave Aufnahme 20 eingreift. Die elastisch oder federnd wirkenden Mittel sind beim Einsetzen der Tragbahnelementstruktur in den Anschlussbauteil 17 derart nachgiebig in Umfangsrichtung und/oder in radialer Richtung, dass aufgrund des konvex vorspringenden Rückens 21 die Tragbahnelemente 15 radial nach innen gezwungen werden und dann, wenn der konvexe Rücken 21 deckungsgleich mit der konkaven Aufnahme 20 ist, die Tragbahnelemente 15 derart elastisch oder federnd beaufschlagt werden, dass der konvexe Rücken 21 radial mit Formschluss in die konkave Aufnahme 20 federnd hineingedrückt wird und die Tragbahnelemente 15 dann kraft- und/oder formschlüssig innerhalb des Anschlussteils 17 axial unverlierbar gehalten sind.

Aufgrund der flächig aneinander liegenden, jeweils zweiachsig gekrümmten Innenfläche 19 und Außenfläche 18 können sich die Tragbahnelemente 15 um ihre Längsachse und Querachse selbst einstellend neigen und an der Laufbahnen bildenden Außenfläche 12 des Profils 11 so ausrichten, dass eine annähernd konstante Belastung der einzelnen Wälzkörper 13 erfolgt. Dadurch ist sichergestellt, dass sich bei Durchbiegungen des Profils 11 und/oder etwaigen Verformungen des Anschlussteils 17 die Last sehr gleichmäßig auf die einzelnen Wälzkörper 13 verteilt. Aufgrund der Beweglichkeit der Tragbahnelemente 15 in Umfangsrichtung und/oder in radialer Richtung in Bezug zueinander ist die Montage des Linearwälzlagers 10 in Achsrichtung des Profils 11 möglich. Dabei wird der an höchster Stelle der gekrümmten Außenfläche 18 gemessene Außendurchmesser auf das Innendurchmessermaß des zylindrischen Teils des Anschlussteils 17 reduziert. Wenn dann bei weiterem Einschieben des Linearwälzlagers 10 in den Anschlussteil 17 der konvexe Rücken 21 und die konkave Aufnahme 20 zur Deckung kommen, bewirken die elastisch oder federnd wirkenden Mittel, dass die Tragbahnelemente 15 voneinander weg radial nach außen gedrückt werden und aufgrund der flächigen Berührung der Innenfläche 19 und Außenfläche 18 unverlierbar im Anschlussteil 17 gehalten sind. Nach Einführen des Profils 11 wird die Position der Tragbahnelemente 15 durch das Profil 11 durch Aufweiten in radialer Richtung festgelegt, wobei der z.B. kugelkalottenförmige Rücken 21 in der entsprechenden kugelkalottenförmigen Aufnahme 20 aufgenommen wird. Beim Entfernen des Profils 11 bleiben die Tragbahnelemente 15 in Position, da diese durch die radial und/oder in Umfangsrichtung wirkenden Kräfte der die Tragbahnelemente 15 elastisch oder federnd beaufschlagenden Mittel 26 am Herausfallen gehindert sind, so dass auch eine sichere Demontage gewährleistet ist. Man erkennt, dass nach Einführen des Profils 11, dessen Außenfläche 12 Laufbahnen für die Wälzkörper 13 bildet, eine Längsverlagerung der Tragbahnelemente 15 und somit des gesamten Linearwälzlagers 10 nicht mehr möglich ist und somit eine axial sichere Positionierung gewährleistet ist.

Das beschriebene Linearwälzlager 10 kann - abweichend von der dargestellten Gestaltung - lediglich parallel zueinander und zur Mittelachse 14 verlaufende einzelne Traglaufbahnen 16 aufweisen, längs denen einzelne Wälzkörperreihen in Axialrichtung vor und zurück laufen, ohne dass ein Endloslauf mit zusätzlicher Rücklaufbahn und endseitigen Umlenkabschnitten erfolgt. Eine derartige Gestaltung des Linearwälzlagers 10 ist besonders für kurze Hubwege geeignet. Auch bei dieser Gestaltung ist der Vorteil verwirklicht, dass sich die einzelnen Tragbahnelemente 15 unabhängig voneinander an den zugeordneten Führungsbahnen auf der Außenfläche 12 des Profils 11 orientieren können. Die einzelnen Tragbahnelemente 15 sind aufgrund der zweiachsig gekrümmten Außenfläche 18 und Innenfläche 19 selbstanpassend, wodurch auch ein ungestörter Lauf des Linearwälzlagers 10 mit sich abwälzenden Wälzkörpern 13 gewährleistet ist.

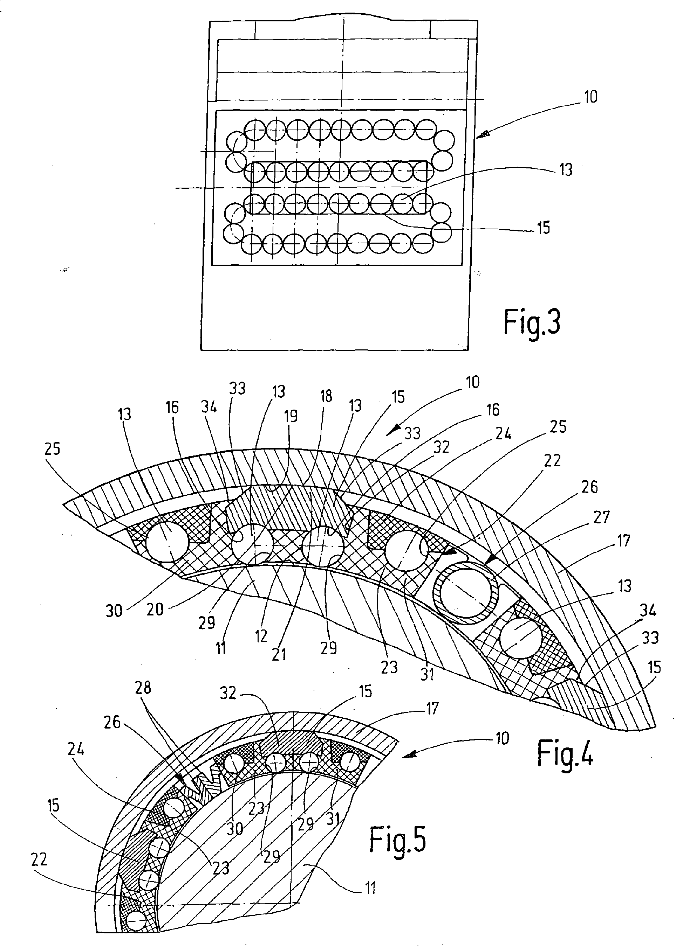

Bei dem in Fig. 1 bis 4 gezeigten ersten Ausführungsbeispiel ist jedem Tragbahnelement 15 ein Käfigelement 22 zugeordnet, das hier geteilt ausgebildet und aus einem inneren Käfigelement 23 und einem äußeren Käfigelement 24 zusammengesetzt ist. Das Käfigelement 22 bildet in üblicher Weise zumindest einen Teil der Führung für die in einer geschlossenen Reihe sich abwälzenden Wälzkörper 13 im Bereich des Tragbahnelements 15, einer der jeweiligen Traglaufbahn 16 zugeordneten, in Umfangsrichtung seitlich daneben verlaufenden Rücklaufbahn 25 und die Rücklaufbahnen 25 an jedem Ende mit der zugeordneten Traglaufbahn 16 verbindenden, hier nicht weiter hervorgehobenen Umlenkabschnitten. Jeweils ein Tragbahnelement 15 ist mit einem Käfigelement 22 verbunden. Die Käfigelemente 22 jeweils zweier in Umfangsrichtung benachbart angeordneter Tragbahnelemente 15 stützen sich in Umfangsrichtung über elastische Mittel 26 elastisch ab. Da die Tragbahnelemente 15 mit den Käfigelementen 22 verbunden sind, wirkt diese elastische Abstützung über das jeweilige Käfigelement 22 auf das Tragbahnelement 15. Diese elastischen Mittel können bei einem nicht gezeigten Ausführungsbeispiel aus federnden Elementen der Käfigelemente 22 gebildet sein, z.B. aus federnden Zungen, über die die Käfigelemente 22 aneinander anliegen. Beim Beispiel in Fig. 1 bis 3 sind als elastische Mittel 26 im Querschnitt etwa rohrartig geformte Profilkörper 27 vorgesehen, die in Umfangsrichtung zwischen zwei benachbarten Käfigelementen 22 angeordnet sind. Bei dem Beispiel gemäß Fig. 5 sind als elastische Mittel 26 z.B. zwei benachbarte, etwa V-förmige Profilkörper 28 je Zwischenraum zwischen zwei benachbarten Käfigelementen 22 vorgesehen.

Das radial innere Käfigelement 23 weist je Traglaufbahn 16 des Tragbahnelements 15 einen Längsschlitz 29 für die radial hindurch zur jeweiligen Traglaufbahn 16 reichenden und sich entlang dieser Traglaufbahn 16 abwälzenden Wälzkörper 13 und in Umfangsrichtung beidseitig über das Tragbahnelement 15 überstehende Abschnitte 30, 31 auf. Das radial äußere Käfigelement 24 übergreift diese beidseitig überstehenden Abschnitte 30, 31 unter Komplettierung einer jeweiligen Rücklaufbahn 25. Man erkennt, dass jedes Tragbahnelement 15 innerhalb einer Längsaufnahme 32 des inneren Käfigelements 23 formschlüssig aufgenommen ist. Diese Längsaufnahme 32 ist im Querschnitt annähernd U-förmig; wobei die beidseitigen Wände jedoch beispielsweise schwach keilförmig mit zur Mittelachse 14 gerichteter Keilspitze verlaufen können. Jedes Tragbahnelement 15 ist innerhalb der Längsaufnahme 32 des inneren Käfigelements 23 formschlüssig aufgenommen und mittels das Tragbahnelement 15, vorzugsweise Schrägflächen 33 dieses, übergreifender Randleisten 34 des inneren Käfigelements 23 radial übergriffen und gehalten.

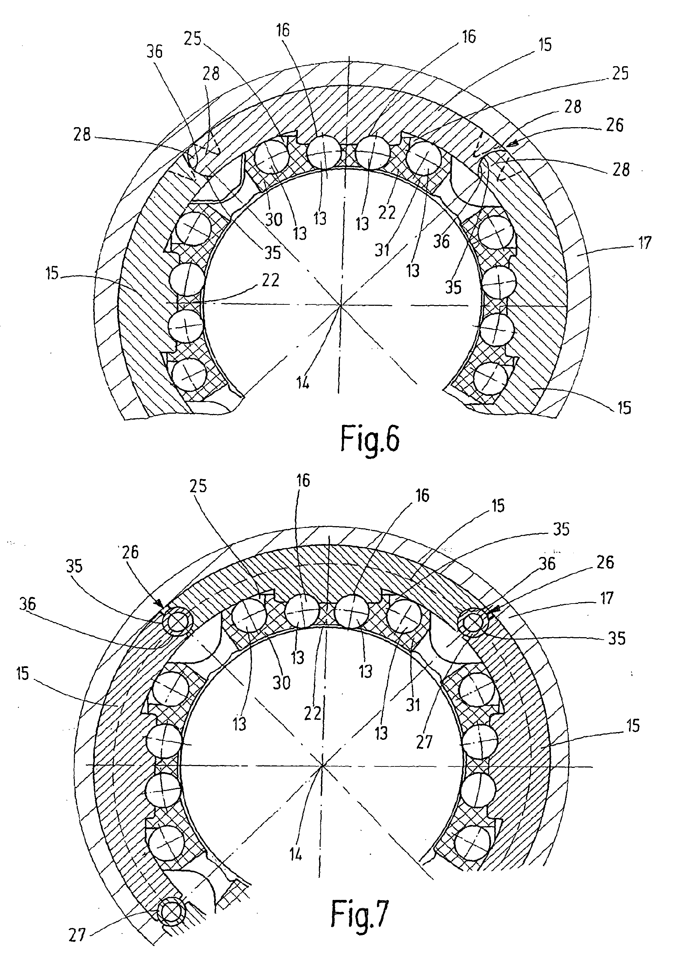

Bei dem in Fig. 6 gezeigten dritten Ausführungsbeispiel und Fig. 7 gezeigten vierten Ausführungsbeispiel sind für die Teile, die dem ersten Ausführungsbeispiel entsprechen, gleiche Bezugszeichen verwendet, so dass dadurch zur Vermeidung von Wiederholungen auf die vorstehende Beschreibung verwiesen ist. Bei diesen Ausführungsbeispielen ist das Käfigelement 22 einteilig gestaltet.

Es ist radial außen von jeweils einem zugeordneten Tragbahnelement 15 in Umfangsrichtung überdeckt. Das jeweilige Tragbahnelement 15 bildet zusammen mit dem Käfigelement 22 je Traglaufbahn 16 einen zugeordneten benachbarten Rücklaufkanal 25 für die Wälzkörper 13. Auch bei diesen Ausführungsbeispielen sind die einzelnen Tragbahnelemente 15 in Umfangsrichtung von elastisch oder federnd wirkenden Mitteln 26 beaufschlagt. Gemäß Fig. 6 liegen die Tragbahnelemente 15 in Umfangsrichtung aneinander an. Sie können in dieser Richtung elastisch federnd abgestützt sein. Die Tragbahnelemente 15 sind im Bereich von umfangsseitig aneinander anliegenden Bereichen mit Profilierungen 35 auf der einen Seite und 36 auf der anderen Seite versehen, die zur Mittelachse 14 etwa parallel verlaufen. Diese Profilierungen 35, 36 sind entweder selbst elastisch und/oder sie nehmen dazwischen elastisch verformbare Mittel auf, wie z.B. in Fig. 7 angedeutet ist, wo entsprechende elastische Mittel 26 zwischen den einander berührenden Profilierungen 35, 36 platziert sind. Es versteht sich gleichwohl, dass diese zusätzlichen elastischen Mittel 26 in Fig. 7 auch anders gestaltet sein können. Beim Ausführungsbeispiel in Fig. 6 ist eine Profilierung 35 als konvex vorspringende und die andere, dazu passende Profilierung 35 als konkav gestaltete Rinne ausgebildet. Auch andere Formen ineinander passender Profilierungen liegen im Rahmen der Erfindung. In Fig. 6 ist zusätzlich gestrichelt angedeutet, dass die Tragbahnelemente 15 statt dessen im Bereich der aneinander grenzenden Enden so gestaltet sein können, dass sich im Querschnitt etwa V-förmige Profilkörper 28 ergeben, die z.B. ähnlich den Profilkörpern 28 in Fig. 5 sind, wobei jedoch jeder V-förmige Profilkörper am einen Ende eines Tragbahnelements 15, als einstückiger Teil dieses, ausgebildet ist.

Bei einem anderen, nicht gezeigten Ausführungsbeispiel können die Tragbahnelemente 15 und/oder die zugeordneten Käfigelemente 22 im Bereich beidseitiger axialer Enden mittels elastisch oder federnd wirkenden Mitteln zusammengehalten sein, die ein radiales Einfedern und Ausfedern der Tragbahnelemente 15 ermöglichen. Z.B. können als derartige Mittel radial innen platzierte und radial nach außen gerichtete Federkräfte ausübende ringförmige Federn vorgesehen sein.

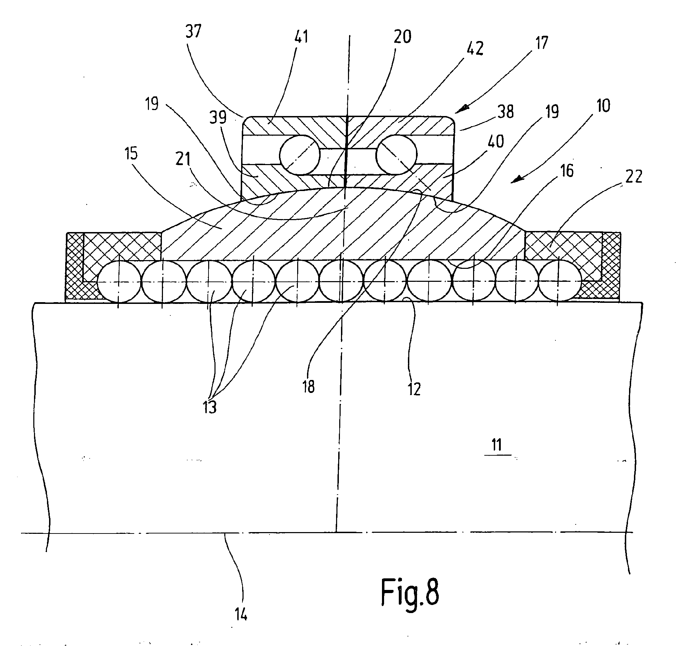

Bei dem in Fig. 8 gezeigten fünften Ausführungsbeispiel sind für die Teile, die den vorhergehenden Ausführungsbeispielen entsprechen, gleiche Bezugszahlen verwendet, so dass dadurch auf die Beschreibung der vorhergehenden Ausführungsbeispiele Bezug genommen ist.

Das Linearwälzlager 10 in Fig. 8 weist einen Anschlussteil 17 auf, der aus mindestens einem Wälzlager 37 gebildet ist, z.B. Kugellager, insbesondere Schrägkugellager od. dgl. Beim gezeigten Ausführungsbeispiel sind zwei Wälzlager 37, 38 axial nebeneinander angeordnet. Jedes Wälzlager 37, 38 weist einen Innenring 39, 40 und einen Außenring 41, 42 auf. Bei jedem Wälzlager 37, 38 kann dieses, z.B. dessen Innenring 39, 40, geteilt sein. In Anpassung an die zweiachsig gekrümmte Außenfläche 18 jedes Tragbahnlements 15 ist die radial innen verlaufende Innenringfläche jedes Innenringes 39, 40 als zweiachsig gekrümmte Innenfläche 19 ausgebildet und liegt mit dieser an der zweiachsig gekrümmten Außenfläche 18 des jeweiligen Tragbahnelements 15 flächig an. Man erkennt, dass bei räumlich festgelegtem Wälzlager 37, 38 das Linearwälzlager 10 aufgrund der kugeligen Aufnahme in den Wälzlagern 37, 38 sich selbst anpassend relativ zu den Wälzlagern 37, 38 und dem Profil 11 bewegen kann. Die Innenringe 39, 40 beider Wälzlager 37, 38 können in vorteilhafter Weise axial verspannt sein. Ihre zweiachsig gekrümmten Innenflächen 19 schließen - in Richtung der Mittelachse 14 betrachtet - aneinander an. Jedes Wälzlager 37, 38 kann für sich montiert werden und auf diese Weise das jeweilige Tragbahnelement 15 mit dem konvexen Rücken 21 in die konkave Aufnahme 20, die beide Wälzlager 37, 38 zusammen bilden, eingebracht werden. Durch axiales Zusammenspannen der Innenringe 39, 40 bleibt diese Position gesichert. Ferner wird dadurch erreicht, dass sich das Linearwälzlager 10 mit dem Innenring 39, 40 aufgrund der geringen Wälzreibung der Wälzkörper drehen kann.

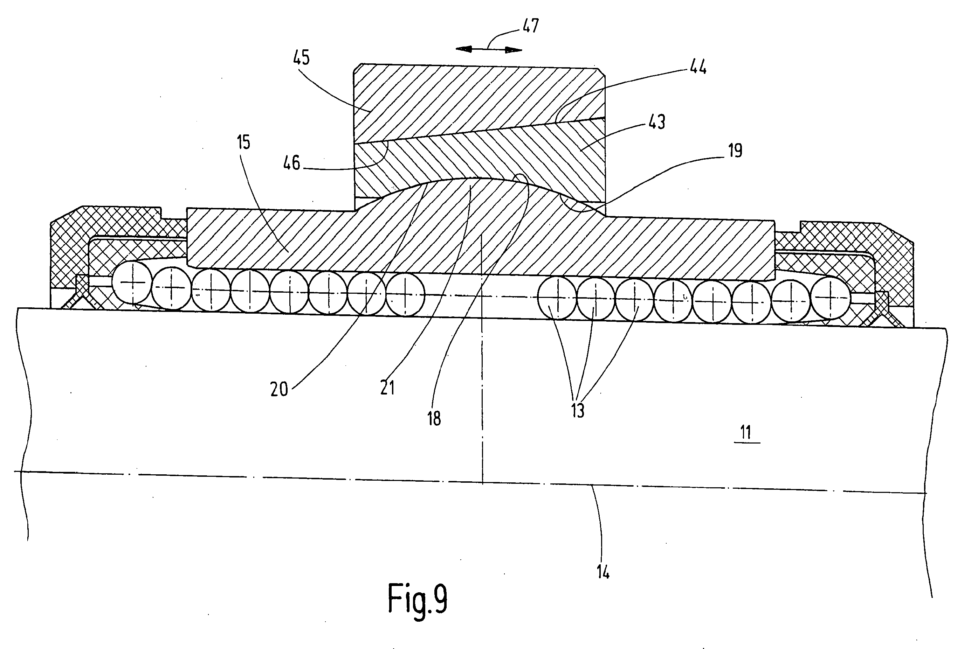

Bei dem in Fig. 9 gezeigten sechsten Ausführungsbeispiel ist die zweiachsig gekrümmte Innenfläche 19 an der radial innen verlaufenden Innenringfläche eines Ringes 43 ausgebildet. Der Ring 43 weist eine in Bezug auf die Mittelachse 14 schräg verlaufende äußere Konusfläche 44 auf. Der Ring 43 ist von einem Außenring 45 umschlossen, der mit einer an die Konusfläche 44 angepassten entsprechenden Konusfläche 46 auf dem Ring 43 aufsitzt und zur Radialverstellung des Ringes 43 gemäß Pfeil 47 axial verstellbar gehalten ist. Der Ring 43 kann in zwei Umfangshälften geteilt sein. Auch eine Teilung in radialer Richtung ist möglich. Bei diesem Ausführungsbeispiel gemäß Fig. 9 sind somit die einzelnen Tragbahnelemente 15 über das Zusammenwirken des Ringes 43 und des Außenringes 45 radial verstellbar.

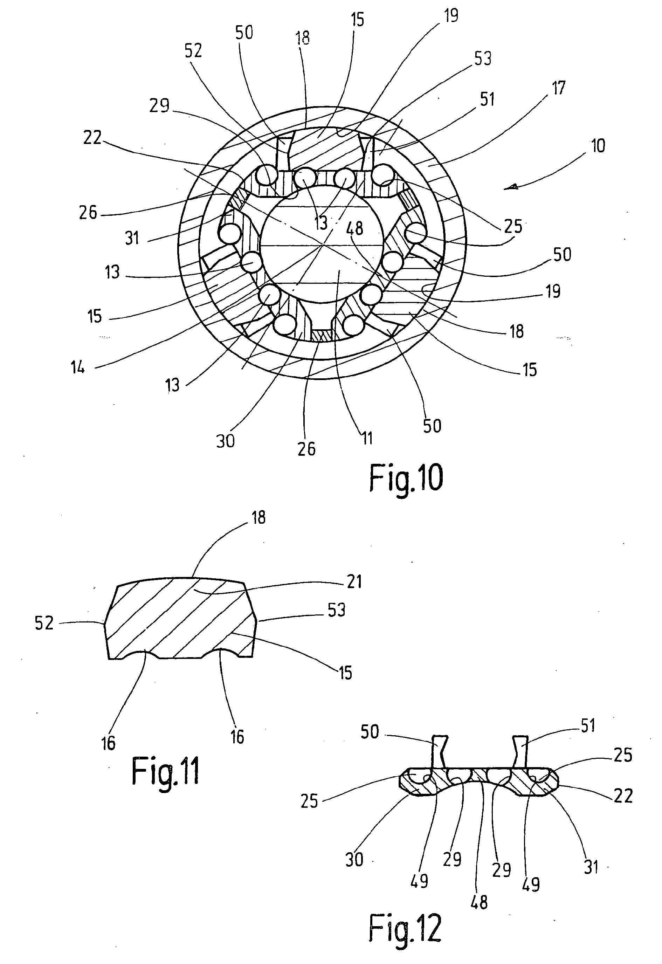

Bei dem in Fig. 10 bis 12 gezeigten Ausführungsbeispiel erkennt man gewisse Parallelen zum ersten Ausführungsbeispiel. Jedoch ist das Käfigelement 22 einteilig gestaltet. Es weist einen mittleren Teil 48 mit je Traglaufbahn 16 einem Längsschlitz 29 für die radial hindurch zur jeweiligen Traglaufbahn 16 reichenden und sich entlang der Traglaufbahn 16 abwälzenden Wälzkörper 13 auf. Beidseitig des mittleren Teils 48 stehen davon in Umfangsrichtung Abschnitte 30, 31 ab, in denen jeweils Rücklaufbahnen 25 bildende Längsnuten 49 enthalten sind. Die Längsnuten 49 weisen einen Umfangsverlauf, im Querschnitt betrachtet, auf, der größer als 90° ist, wodurch eine Herausfallsicherung für in den Längsnuten 49 geführte, zurücklaufende Wälzkörper 13 geschaffen ist.

Das jeweilige Tragbahnelement 15 ist mit dem Käfigelement 22 mittels einer Schnappverbindung verbunden. Hierzu weist das Käfigelement 22 von dessen mittleren Teil 48 hochragende Klemmschenkel 50, 51 auf, die zur Verbindung des jeweiligen Tragbahnelements 15 mit dem Käfigelement 22 klemmend am Tragbahnelement 15 angreifen, in der Weise, dass jeweils zwei Klemmschenkel 50, 51, die ein Paar bilden, ein Tragbahnelement 15 seitlich umfassen und dazwischen haltern. In vorteilhafter Weise sind entlang der in Richtung der Mittelachse 14 verlaufenden Längserstreckung eines Käfigelements 22 z.B. zwei beabstandene Klemmschenkelpaare 50, 51 vorgesehen. Die Klemmschenkel 50, 51 sind derart elastisch, dass dazwischen ein Tragbahnelement 15 einschnappbar ist und letzteres sicher von den Klemmschenkeln 50, 51 gehalten ist. Das jeweilige Tragbahnelement 15 weist, im Querschnitt gesehen, etwa prismatische Seitenbereiche 52, 53 auf, die zur Seite hin leicht V-förmig gestaltet sind. In Anpassung an diese Seitenbereiche 52, 53 sind die den Seitenbereichen 52, 53 zugewandten Innenseiten der Klemmschenkel 50, 51 ausgebildet.

Das Linearwälzlager 10 gemäß diesem siebten Ausführungsbeispiel ist im Aufbau besonders einfach. Zwischen den in Umfangsrichtung benachbarten Käfigelementen 22 sind elastisch oder federnd wirkende Mittel 26 angeordnet, die vielfältig gestaltet sein können, z.B. als Hohlkörper, etwa V-förmig profilierte Leisten od. dgl.

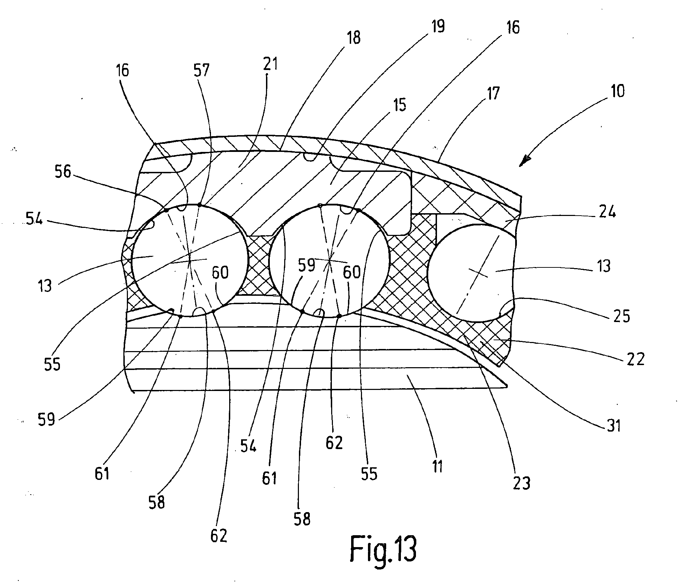

Bei dem in Fig. 13 gezeigten achten Ausführungsbeispiel des Linearwälzlagers 10 ist dieses von einem Laufbahnen für die Wälzkörper 13 bildenden Profil 11, z.B. einer Welle, durchsetzt. Je Tragbahnelement 15 ist dessen mindestens eine Traglaufbahn 16, im Querschnitt betrachtet, aus zwei Bogenabschnitten 54 und 55 verschiedener Radien zusammengesetzt. Auf diese Weise ist je Traglaufbahn 16 eine Zweipunktanlage für kugelförmige Wälzkörper 13 an dieser mindestens einen Traglaufbahn 16 gebildet. Die beiden Punkte dieser Zweipunktanlage sind schematisch mit 56 und 57 bezeichnet. Dadurch ist erreicht, dass im Bereich der jeweiligen Traglaufbahn 16 die Tragfähigkeit nahezu verdoppelt ist.

Die je Tragbahn 16 vorgesehenen Laufbahnen des Profils 11 sind hier als eingetiefte Längsrinnen 58 je Traglaufbahn 16 ausgebildet. Die durch die jeweilige Längsrinne 58 gebildete Laufbahn für die Wälzkörper 13 ist, im Querschnitt betrachtet, aus zwei Bogenabschnitten 59, 60 verschiedener Radien zusammengesetzt unter Bildung dortiger Zweipunktanlagen für kugelförmige Wälzkörper 13 an der jeweiligen Längsrinne 58. Diese dortigen Zweipunktanlagen sind zur Verdeutlichung durch Punkte 61, 62 angedeutet. Aufgrund dieser Gestaltung ergibt sich ein Linearwälzlager 10, bei dem jeweils eine Traglaufbahn 16 des Tragbahnelements 15 zusammen mit jeweils einer zugeordneten Längsrinne 58 des Profils 11 eine Vierpunktanlage für kugelförmige Wälzkörper 13 dazwischen bildet. Das Tragbahnelement 15 ist am Rücken 21 so ausgestaltet, dass es um die Längsachse pendeln kann. Dadurch verteilt sich die Last gleichmäßig auf die in Fig. 13 linke und die rechte Laufbahn. Deshalb drehen die Kugeln 13 um Achsen, die rechtwinklig zu den Verbindungslinien der Berührungspunkte 56, 60 bzw. 57, 59 der Kugeln 13 liegen. Damit ergibt sich ein geometrisch einwandfreies Abwälzen der Kugeln 13 ohne Gleitschlupf.

Bei allen Ausführungsbeispielen bestehen die Tragbahnelemente 15 aus Metall, ebenfalls der Anschlussteil 17 und das Profil 11. Das jeweilige Käfigelement kann aus Kunststoff gebildet sein.

Das Anschlussbauteil 17 kann statt der gezeigten zylindrischen Hülse oder zusätzlich zu dieser auch mindestens eine Ringanordnung aufweisen, die die Tragbahnelemente 15 auf zumindest einem Längenabschnitt umfasst und radial abstützt. Diese Ringanordnung kann mindestens einen Ring aufweisen, an dessen Innenfläche 19 die Tragbahnelemente 15 mit ihrer Außenfläche 18 des Längsabschnitts anliegen. Diese Innenfläche 19 des mindestens einen Ringes kann zweiachsig gekrümmt sein und in dieser Weise die konkave Aufnahme 20 bilden. Der zugeordnete konvex vorspringende Rücken 21 auf der Außenfläche 18 des jeweiligen Tragbahnelements 15 wirkt dann mit dieser konvexen Aufnahme 20 des jeweiligen Ringes zur sphärischen Lagerung zusammen. Die Verhältnisse können auch kinematisch umgekehrt sein, wobei dann die konkave Aufnahme 20 auf der Außenfläche 18 des jeweiligen Tragbahnelements 15 und der konvexe Rücken 21 auf der Innenfläche des jeweiligen Ringes vorgesehen sind.

Bei einem anderen, ebenfalls nicht gezeigten Ausführungsbeispiel weisen die Tragbahnelemente 15 jeweils zu ihrer Traglaufbahn 16 parallele Außenflächen 19 auf. Der die Tragbahnelemente 15 umfassende Ring weist eine ebenfalls zylindrische Innenfläche auf und liegt mit dieser Innenfläche an den Außenflächen der Tragbahnelemente 15 zu deren Abstützung an. Die Außenfläche des Ringes ist zweiachsig gekrümmt, zumindest auf einem Längenabschnitt. Diese zweiachsig gekrümmte Außenfläche des Ringes ist von einem Außenring umfasst, der eine entsprechend zweiachsig gekrümmte Innenfläche aufweist, mit der der Außenring auf der zweiachsig gekrümmten Außenfläche des Ringes aufsitzt. Bei diesem Ausführungsbeispiel ist somit das sphärische Lager durch die Ringanordnung mit innerem Ring und diesen umgebendem Außenring gebildet, wobei die Tragbahnelemente 15 von dieser Ringanordnung umfasst sind. Auch hierbei ist eine kinematische Umkehr möglich, wonach der konvex vorspringende Rücken nicht am Ring sondern auf der Innenseite des Außenringes und die konkave Aufnahme nicht am Außenring sondern auf der Außenseite des inneren Ringes vorgesehen sind.

## Patentansprüche

1. Linearwälzlager, mit im Querschnitt entlang einem Kreis verteilt angeordneten, zueinander und zur Mittelachse (14) des Lagers im Wesentlichen parallelen Wälzkörperreihen mit jeweils die Traglaufbahn (16) zumindest einer Wälzkörperreihe aufweisenden, um die Mittelachse (14) des Lagers gruppierten Tragbahnelementen (15), die auf zumindest einem Längenabschnitt in Umfangsrichtung von mindestens einem Anschlussteil (17) derart umfasst sind, dass die Tragbahnelemente (15) mit der Außenfläche (18) des Längenabschnitts an einer zugeordneten Innenfläche (19) des mindestens einen Anschlussteils (17) anliegen,
**dadurch gekennzeichnet,**
**dass** die Innenfläche (19) und die Außenfläche (18) jeweils zweiachsig gekrümmt sind und flächig aneinander liegen.

2. Linearwälzlager nach Anspruch 1,
**dadurch gekennzeichnet,**
**dass** die zweiachsige Krümmung der Innenfläche (19) maßgleich und formgleich der zweiachsigen Krümmung der Außenfläche (18) ist.

3. Linearwälzlager nach Anspruch 1 oder 2,
**dadurch gekennzeichnet ,**
**dass** die zweiachsige Krümmung der Innenfläche (19) und der Außenfläche (18) um eine längs und etwa parallel zur Mittelachse (14) des Lagers verlaufende erste Achse und zugleich auch um eine quer, insbesondere etwa rechtwinklig, zur ersten Achse verlaufende zweite Achse verläuft.

4. Linearwälzlager nach Anspruch 3,
**dadurch gekennzeichnet ,**
**dass** der Krümmungsradius um die erste Achse ein anderer ist als derjenige um die zweite Achse.

5. Linearwälzlager nach Anspruch 3,
**dadurch gekennzeichnet ,**
**dass** der Krümmungsradius um die erste Achse der gleiche ist wie derjenige um die zweite Achse.

6. Linearwälzlager nach einem der Ansprüche 1 bis 5,
**dadurch gekennzeichnet,**
**dass** die Innenfläche (19) und die Außenfläche (18), die flächig aneinanderliegen, entsprechend etwa einer Kugelkalotte gekrümmt sind.

7. Linearwälzlager nach einem der Ansprüche 1 bis 6,
**dadurch gekennzeichnet,**
**dass** jedes Tragbahnelement (15) auf der Außenseite oder insbesondere der mindestens eine Anschlussteill (17) auf seiner radial innen befindlichen Seite eine konkave Aufnahme (20) aufweist, die die zweiachsig gekrümmte Innenfläche (19) trägt.

8. Linearwälzlager nach einem der Ansprüche 1 bis 7,
**dadurch gekennzeichnet,**
**dass** der mindestens eine Anschlussteil (17) auf der Innenseite oder insbesondere die Tragbahnelemente (15) auf zumindest einem Längenabschnitt außenseitig einen konvex vorspringenden Rücken (21) aufweisen, der die zweiachsig gekrümmte Außenfläche (18) trägt.

9. Linearwälzlager nach einem der Ansprüche 1 bis 8,
**dadurch gekennzeichnet ,**
**dass** die Tragbahnelemente (15) relativ zueinander beweglich sind.

10. Linearwälzlager nach einem der Ansprüche 1 bis 9,
**dadurch gekennzeichnet,**
**dass** die Tragbahnelemente (15) in Umfangsrichtung und/oder in radialer Richtung in Bezug zueinander beweglich sind.

11. Linearwälzlager nach einem der Ansprüche 1 bis 10,
**dadurch gekennzeichnet,**
**dass** die Tragbahnelemente (15) in Umfangsrichtung und/oder in radialer Richtung von elastisch oder federnd wirkenden Mitteln (26) beaufschlagt oder beaufschlagbar sind.

12. Linearwälzlager nach Anspruch 11,
**dadurch gekennzeichnet,**
**dass** die elastisch oder federnd wirkenden Mittel (26) beim Einsetzen der Tragbahnelementstruktur in den Anschlussteil (17) derart nachgiebig sind, dass aufgrund des konvex vorspringenden Rückens (21) die Tragbahnelemente (15) radial nach innen gezwungen werden, und dass dann, wenn der konvexe Rücken (21) deckungsgleich mit der konkaven Aufnahme (20) ist, die Tragbahnelemente (15) derart elastisch oder federnd beaufschlagt werden, dass der konvexe Rücken (21) radial mit Formschluss in die konkave Aufnahme (20) eingreift und die Tragbahnelemente (15) kraft- und/oder formschlüssig innerhalb des Anschlussteils (17) axial unverlierbar gehalten sind.

13. Linearwälzlager nach einem der Ansprüche 1 bis 12,
**dadurch gekennzeichnet,**
**dass** die Tragbahnelemente (15) in Umfangsrichtung aneinander anliegen und/oder elastisch federnd abgestützt sind.

14. Linearwälzlager nach Anspruch (13),
**dadurch gekennzeichnet ,**
**dass** die Tragbahnelemente (15) im Bereich von umfangsseitig benachbarten und/oder aneinander anliegenden Bereichen zur Mittelachse (14) des Lagers etwa parallel verlaufende Profilierungen (35,36) aufweisen, die selbst elastisch sind und/oder dazwischen elastisch verformbare Mittel (26) aufnehmen.

15. Linearwälzlager nach einem der Ansprüche 1 bis 14,
**dadurch gekennzeichnet,**
**dass** die Tragbahnelemente (15) und/oder zugeordnete Käfigelemente (22) an ihren beidseitigen axialen Endbereichen mittels elastisch oder federnd wirkenden Mitteln zusammengehalten sind, die ein radiales Einfedern und Ausfedern der Tragbahnelemente (15) bzw. Käfigelemente (22) ermöglichen.

16. Linearwälzlager nach einem der Ansprüche 1 bis 15,
**dadurch gekennzeichnet,**
**dass** der Anschlussteil (17) aus mindestens einem mit Innenring (39,40) und Außenring (41,42) versehenen Wälzlager (37,38), z.B. Kugellager, wie Schrägkugellager od.dergl., gebildet ist und dass die radial innen verlaufende Innenringfläche als zweiachsig gekrümmte Innenfläche (19) ausgebildet ist,
an der die Tragbahnelemente (15) mit der entsprechend zweiachsig gekrümmten Außenfläche (18) flächig anliegen.

17. Linearwälzlager nach Anspruch 16,
**dadurch gekennzeichnet,**
**dass** das Wälzlager (37,38) z.B. dessen Innenring (39,40), geteilt ist.

18. Linearwälzlager nach Anspruch 16 oder 17,
**dadurch gekennzeichnet,**
**dass** zwei Wälzlager (37,38) nebeneinander auf der zweiachsig gekrümmten Außenfläche (18) der Tragbahnelemente (15) angeordnet sind, wobei deren zweiachsig gekrümmte Innenflächen (19), in Richtung der Mittelachse (14) des Lagers betrachtet, aneinander anschließen.

19. Linearwälzlager nach Anspruch 18,
**dadurch gekennzeichnet,**
**dass** die Innenringe (39,40) beider Wälzlager (37,38) axial verspannt sind.

20. Linearwälzlager nach einem der Ansprüche 1 bis 15,
**dadurch gekennzeichnet,**
**dass** die zweiachsig gekrümmte Innenfläche (19) an der radial innen verlaufenden Innenringfläche eines Ringes (43) ausgebildet ist, der eine in Bezug auf die Mittelachse (14) des Lagers schräg verlaufende äußere Konusfläche (44) aufweist, und dass der Ring (43) von einem Außenring (45) umschlossen ist, der mit einer an die Konusfläche (44) angepassten entsprechenden Konusfläche (46) auf dem Ring (43) aufsitzt und zur Radialverstellung des Ringes (43) axial verstellbar gehalten ist.

21. Linearwälzlager nach einem der Ansprüche 1 bis 20,
**dadurch gekennzeichnet,**
**dass** die Tragbahnelemente (15) jeweils zwei zueinander etwa parallele Traglaufbahnen (16) aufweisen.

22. Linearwälzlager nach einem der Ansprüche 1 bis 21,
**dadurch gekennzeichnet,**
**dass** jedem Tragbahnelement (15) ein Käfigelement (22) zugeordnet ist, welches zumindest einen Teil der Führung für die in einer geschlossenen Reihe sich abwälzenden Wälzkörper (13) im Bereich des Tragbahnelements (15), einer der jeweiligen Traglaufbahn (16) zugeordneten Rücklaufbahn (25) und von die Traglaufbahnen (16) und die Rücklaufbahnen verbindenden Umlenkabschnitten bildet, und dass die Tragbahnelemente (15) mit den Käfigelementen (22) verbunden sind.

23. Linearwälzlager nach Anspruch 22,
**dadurch gekennzeichnet ,**
**dass** die Käfigelemente (22) jeweils zweier in Umfangsrichtung benachbart angeordneter Tragbahnelemente (15) sich in Umfangsrichtung über elastische Mittel (26) elastisch abstützen.

24. Linearwälzlager nach Anspruch 23,
**dadurch gekennzeichnet,**
**dass** die elastischen Mittel (26) aus federnden Elementen der Käfigelemente (22) und/oder aus zwischen diesen angeordneten, elastisch verformbaren Mitteln (27,28) gebildet sind.

25. Linearwälzlager nach einem der Ansprüche 22 bis 24,
**dadurch gekennzeichnet,**
**dass** jedes Käfigelement (22) geteilt ausgebildet ist und ein radial inneres Käfigelement (23) aufweist, das je Traglaufbahn (16) des Tragbahnelements (15) einen Längsschlitz (29) für die radial hindurch zur jeweiligen Traglaufbahn (16) reichenden und sich entlang der Traglaufbahn (16) abwälzenden Wälzkörper (13) und in Umfangsrichtung beidseitig über das Tragbahnelement (15) überstehende Abschnitte (30,31) aufweist.

26. Linearwälzlager nach Anspruch 25,
**dadurch gekennzeichnet**
**dass** das geteilte Käfigelement (22) ein radial äußeres Käfigelement (24) aufweist, das die beidseitig überstehenden Abschnitte (30,31) des inneren Käfigelements (23) unter Bildung einer jeweiligen Rücklaufbahn (25) übergreift.

27. Linearwälzlager nach Anspruch 25 oder 26,
**dadurch gekennzeichnet,**
**dass** jedes Tragbahnelement (15) innerhalb einer Längsaufnahme (52) des inneren Käfigelements (23) formschlüssig aufgenommen ist und mittels das Tragbahnelement (15), vorzugsweise Schrägflächen (33) dieses, übergreifender Randleisten (34) des inneren Käfigelements (23) radial übergriffen und gehalten ist.

28. Linearwälzlager nach einem der Ansprüche 14 bis 27,
**dadurch gekennzeichnet ,**
**dass** als elastisch verformbare Mittel (26) im Querschnitt etwa V-förmige oder etwa rohrförmige oder dergleichen geformte Profilkörper (27,28) in Umfangsrichtung zwischen zwei benachbarten Käfigelementen (22) und/oder Tragbahnelementen (15) angeordnet sind.

29. Linearwälzlager nach einem der Ansprüche 1 bis 28,
**dadurch gekennzeichnet,**
**dass** jedes Käfigelement (22) einteilig ist und radial außen von einem zugeordneten Tragbahnelement (15) in Umfangsrichtung überdeckt ist, wobei das jeweilige Tragbahnelement (15) zusammen mit dem Käfigelement (22) je Traglaufbahn (16) einen zugeordneten benachbarten Rücklaufkanal (25) für die Wälzkörper (13) bildet.

30. Linearwälzlager nach einem der Ansprüche 1 bis 29,
**dadurch gekennzeichnet,**
**dass** das Käfigelement (22) einteilig ist, einen mittleren Teil (48) mit je Traglaufbahn (16) einem Längsschlitz (29) für die radial hindurch zur jeweiligen Traglaufbahn (16) reichenden und sich entlang der Traglaufbahn (16) abwälzenden Wälzkörper (13) und beidseitig des mittleren Teils (48) von diesem in Umfangsrichtung abstehende Abschnitte (30,31) aufweist, in denen jeweils Rücklaufbahnen (25) bildende Längsnuten (49) enthalten sind, die einen Umfangsverlauf größer als 90° als Herausfallsicherung für die Wälzkörper (13) aufweisen.

31. Linearwälzlager nach einem der Ansprüche 1 bis 30,
**dadurch gekennzeichnet,**
**dass** das jeweilige Tragbahnelement (15) mittels einer Schnappverbindung mit dem Käfigelement (22) verbunden ist.

32. Linearwälzlager nach Anspruch 31,
**dadurch gekennzeichnet,**
**dass** das Käfigelement (22) von dessen mittleren Teil (48) hochragende Klemmschenkel (50,51), z.B. zwei in Längsrichtung beabstandete Klemmschenkelpaare (50,51) aufweist, die zur Verbindung des jeweiligen Tragbahnelements (15) mit dem Käfigelement (22) klemmend am Tragbahnelement (15) angreifen.

33. Linearwälzlager nach Anspruch 32,
**dadurch gekennzeichnet,**
**dass** das jeweilige Tragbahnelement (15) im Querschnitt gesehen etwa prismatische Seitenbereiche (52,53) aufweist, an denen die Klemmschenkel (50,51) formschlüssig angreifen.

34. Linearwälzlager nach einem der Ansprüche 1 bis 33,
**dadurch gekennzeichnet,**
**dass** die mindestens eine Traglaufbahn (16) des Tragbahnelements (15), im Querschnitt betrachtet, aus zwei Bogenabschnitten (54,55) verschiedener Radien zusammengesetzt ist unter Bildung von Zweipunktanlagen (56,57) für kugelförmige Wälzkörper (13) an der mindestens einen Traglaufbahn (16).

35. Linearwälzkörper nach Anspruch 34, das von einem Laufbahnen für die Wälzkörper (13) bildenden Profil (11), z.B. einer Welle, durchsetzt ist,
**dadurch gekennzeichnet,**
**dass** die je Tragbahn (16) vorgesehenen Laufbahnen als Längsrinnen (58) ausgebildet sind, die im Querschnitt betrachtet aus zwei Bogenabschnitten (59,60) verschiedener Radien zusammengesetzt sind unter Bildung von Zweipunktanlagen (61,62) für kugelförmige Wälzkörper (13) an der jeweiligen Längsrinne (58).

36. Linearwälzlager nach Anspruch 34 und 35,
**dadurch gekennzeichnet,**
**dass** jeweils eine Traglaufbahn (16) des Tragbahnelements (15) zusammen mit jeweils einer zugeordneten Längsrinne (58) des Profils (11) eine Vierpunktanlage (56,57,61,62) für kugelförmige Wälzkörper (13) dazwischen bildet.

37. Linearwälzlager nach einem der Ansprüche 1 bis 36,
**dadurch gekennzeichnet,**
**dass** die jeweiligen Tragbahnelemente (15) und/oder das Profil (11) und/oder der Anschlussteil (17) aus Metall gebildet sind und dass bei vorhandenem Käfigelement (22) dieses aus Kunststoff gebildet ist.

38. Linearwälzlager, mit im Querschnitt entlang einem Kreis verteilt angeordneten, zueinander und zur Mittelachse (14) des Lagers im Wesentlichen parallelen Wälzkörperreihen mit jeweils die Traglaufbahn (16) zumindest einer Wälzkörperreihe aufweisenden, um die Mittelachse (14) des Lagers gruppierten Tragbahnelementen (15), und mit mindestes einer die Tragbahnelemente (15) auf zumindest einem Längenabschnitt umfassenden und radial abstützenden Ringanordnung mit mindestens einem Ring, an dessen Innenfläche (19) die Tragbahnelemente mit ihrer Außenfläche (18) des Längenabschnitts anliegen, insbesondere nach einem oder mehreren der vorhergehenden Ansprüche,
**dadurch gekennzeichnet,**
**dass** die Innenfläche oder die Außenfläche des Ringes zweiachsig gekrümmt ist.

39. Linearwälzlager nach Anspruch 38,
**dadurch gekennzeichnet,**
**dass** die Tragbahnelemente (15) jeweils zur ihrer Traglaufbahn (16) parallele Außenflächen (19) aufweisen und der diese umfassende Ring mit seiner zylindrischen Innenfläche an den Außenflächen (19) anliegt und dass der Ring auf seiner zweiachsig gekrümmten Außenfläche von einem Außenring umfasst ist, der eine entsprechend zweiachsig gekrümmte Innenfläche aufweist, mit der der Außenring auf der zweiachsig gekrümmten Außenfläche des Ringes aufsitzt, oder kinematisch umgekehrt.
